Europäisches Patentamt

European Patent Office

Office européen des brevets

(11) Veröffentlichungsnummer: **0 081 241**
**B1**

# (12) EUROPÄISCHE PATENTSCHRIFT

(45) Veröffentlichungstag der Patentschrift:
27.03.85

(21) Anmeldenummer: 82111356.0

(22) Anmeldetag: 08.12.82

(51) Int. Cl.⁴: **C 10 K 1/16, B 01 D 53/14**

(54) Verfahren zur Entfernung von sauren Gasen aus Gasgemischen.

(30) Priorität: 08.12.81 DE 3148520

(43) Veröffentlichungstag der Anmeldung:
15.06.83 Patentblatt 83/24

(45) Bekanntmachung des Hinweises auf die Patenterteilung:
27.03.85 Patentblatt 85/13

(84) Benannte Vertragsstaaten:
BE DE FR GB IT NL

(56) Entgegenhaltungen:
DE - A - 2 644 323
DE - A - 2 759 124
FR - A - 2 380 339

(73) Patentinhaber: Linde Aktiengesellschaft,
Abraham-Lincoln-Strasse 21, D-6200 Wiesbaden (DE)

(72) Erfinder: Bengeser, Georg, Dipl.-Ing., Münchner
Strasse 27, D-8021 Deining (DE)
Erfinder: Ranke, Gerhard, Dipl.-Ing., Feichtetstrasse 6,
D-8134 Pöcking (DE)

**Beschreibung**

Die Erfindung betrifft ein Verfahren zur Entfernung von sauren Gasen aus CO-haltigen Gasgemische, die außerdem Verbindungen von zur Carbonylbildung befähigten Schwermetallen enthalten, durch Druckwäsche bei Temperaturen unter 0°C mit einem Waschmittel, das nach Aufnahme der sauren Bestandteile durch Entspannen, Austreiben und Anwärmen mittels Wärmetauschern von den sauren Gasen befreit wird.

Die Belegung von Apparaten mit Metallsulfiden im Zuge der Aufarbeitung von Spaltgasen, die durch Vergasung fester oder flüssiger Brennstoffe mit Wasserdampf und Sauerstoff unter Druck und erhöhter Temperatur erzeugt wurden und die zu $H_2$—CO-Synthesegasen oder $H_2$—$N_2$-Synthesegasen weiterverarbeitet werden, ist ein bekanntes Problem. Es wurde auch bereits erkannt, daß dieses Problem letztlich auf Metallcarbonyle zurückzuführen ist, die sich im Verlaufe der Verarbeitung der Spaltgase bilden und dazu neigen, mit im Spaltgas oder in anderen Prozeßteilnehmern vorhandenen Schwefelverbindungen Sulfide zu bilden, die sich ihrerseits wieder auf bestimmten Apparateteilen ablagern und diese im Laufe der Zeit verstopfen.

Aus den Gasgemischen müssen bei der Herstellung technischer Gase die sauren Bestandteile wie $CO_2$, $H_2S$ und COS entfernt werden. Dies erfolgt vorteilhaft durch Waschen mit physikalisch wirkenden Waschmitteln, wie z. B. Alkoholen, Glykolen oder Äthern. Als besonders günstig hat sich das Methanolwaschverfahren erwiesen, bei dem die sauren Bestandteile bei Temperaturen bis unter —70°C und hohen Drücken (bis zu 80 bar) mit Methanol ausgeschieden werden. Zur Regenerierung wird das Waschmittel nach Aufnahme der Sauergase und gut löslichen Metallcarbonylen entspannt, mit Strippgas behandelt bzw. mittels Wärmetauschern angewärmt. Dabei zerfallen die Metallcarbonyle, in CO und reaktionsfähige Schwermetalle, die mit dem vorhandenen $H_2S$ wiederum Metallsulfide bilden, wodurch an verschiedenen Stellen Belegungen auftreten.

Um dies zu verhindern, wird z. B. in der DE-AS 2 610 982 vorgeschlagen, Schwermetallverbindungen, die normalerweise in der Ausgasungskolonne anbacken würden, vor dem Eintritt der Lösung in diese Kolonne durch Erhitzen mindestens eines Teils der Waschlösung auf 70 bis 250°C, bei einem Druck höher als der Dampfdruck der Waschflüssigkeit und einer Verweilzeit von mindestens 0,25 Stunden in einem Vorreaktor, der mit Füllkörpern gefüllt sein kann, auszufällen.

Die Ablagerungen können aber auch innerhalb der Gegenströmer beim Anwärmen des Waschmittels auftreten. Letzteres ist besonders ungünstig, da die Entfernung dieser Ablagerungen aus den Wärmetauschern sehr schwierig ist.

Aufgabe der vorliegenden Erfindung ist es daher, das Verfahren der eingangs genannten Art so zu verbessern, daß keine Ablagerungen von Metallsulfiden mehr auftreten und damit die Betriebskosten gesenkt werden.

Diese Aufgabe wird erfindungsgemäß dadurch gelöst, daß zur Vermeidung des Carbonylzerfalls während der Anwärmung des beladenen Waschmittels der CO-Partialdruck über den CO-Gleichgewichtspartialdruck im Waschmittel erhöht wird. Der Gleichgewichtspartialdruck hängt dabei unter anderem ab von der Art der vorliegenden Carbonyle (z. B. Nickel- oder Eisencarbonyle), vom Druck der Komponenten, von der Konzentration der Metallcarbonyle und von der Temperatur.

Metallcarbonyle sind in vielen organischen Waschmitteln gut bzw. sehr gut löslich. Sie werden daher zusammen mit den zu entfernenden Sauergasen ausgewaschen. Beim Anwärmen des beladenen Waschmittels sinkt die Löslichkeit des Carbonyls ab, wodurch bei vorgegebener Beladung der Partialdruck ansteigt. Bei den Carbonylen, die durch Reaktion von Schwermetallen mit CO entstehen, besteht jedoch bei erhöhter Temperatur die Neigung zum Zerfall in reaktionsfähiges Schwermetall und CO. Das entstehende reaktionsfähige Schwermetall reagiert dann leicht mit dem im Waschmittel enthaltenen Schwefelwasserstoff unter Bildung von Metallsulfiden und freiem Wasserstoff.

Überraschenderweise haben nunmehr Versuche gezeigt, daß der Zerfall der Carbonyle durch den CO-Partialdruck beeinflußt werden kann. Es hat sich dabei herausgestellt, daß die Metallcarbonyle bei erhöhtem CO-Partialdruck stabil sind. Es muß daher darauf geachtet werden, daß bei der Anwärmung des beladenen Waschmittels genügend CO anwesend ist, um den Carbonylzerfall innerhalb der Wärmetauscher zu verhindern. Wird dagegen der CO-Partialdruck über der mit Carbonylen beladenen Waschflüssigkeit gesenkt, so kann das Carbonyl zerfallen. Am einfachsten wird dies durch Drucksenkung erreicht.

Zur Anhebung des CO-Partialdrucks während der Anwärmung des beladenen Waschmittels haben sich zwei bevorzugte Maßnahmen ausgezeichnet. So kann dem beladenen Waschmittel vor den Wärmetauschern CO-reiches Gas, z. B. auch reines CO, eingeblasen werden. Auf diese Weise wird verhindert, daß sich in den Wärmetauschern Verlegungen mit Metallsulfiden bilden. Nach Durchgang durch Wärmetauscher kann das beladene Waschmittel dann unter den Gleichgewichtspartialdruck entspannt werden, wobei die entstehende Metallsulfide abgeschieden, das Waschmittel einer Regeneriersäule zugeführt und das Entgasungsgas abgezogen wird. Dabei kann das Entgasungsgas einer Anreicherungssäule zugeführt oder nach Rückverdichtung dem Rohgas beigemischt werden. Dadurch kann sowohl der CO-Verlust reduziert als auch gleichzeitig eine Herabsetzung der $H_2S$-Konzentration im Gas zur Claus-Anlage vermieden werden. Nach einer bevorzugten Ausführungsform des erfindungsgemäßen Verfahrens ist dabei außerdem vorgesehen, das Waschmittel vor dem

Entspannen unter den Gleichgewichtspartial-druck einem weiteren Entspannungsgefäß zuzu-leiten, in dem es auf einen CO-Partialdruck über dem Gleichgewichtspartialdruck entspannt wird und das dabei freiwerdende CO-reiche Flashgas dem beladenen Waschmittel vor den Wärmetau-schern eingeblasen wird. Diese Verfahrensfüh-rung bietet den Vorteil, daß das CO im Kreislauf geführt werden kann und nur auftretende Verluste durch frisches CO ersetzt werden müssen, was sich in einer Kostensenkung niederschlägt.

Alternativ zur Einspeisung von CO zum beladenen Waschmittel als Möglichkeit der CO-Partialdruckanhebung kann das von der Waschsäule kommende beladene, unter hohem Druck stehende Waschmittel auch nur soweit entspannt werden, daß der CO-Partialdruck vor der Erwärmung im Wärmetauscher über dem Gleichgewichtspartialdruck des CO im Waschmittel liegt. Das bei der Entspannung freigesetzte Gas kann dabei dem Rohgas zugeführt werden. Nach der Erwärmung im Wärmetauscher wird das Waschmittel bevorzugt auf einen Druck über dem CO-Partialdruck im Waschmittel entspannt und die freiwerdenden Flashgase ebenfalls dem Rohgas zugemischt. Anschließend wird das Waschmittel auf einen Druck unter dem CO-Partialdruck entspannt, so daß sich Metallsulfide bilden können, die abgeschieden werden. Die Flashgase können wieder in das Rohgas eingeleitet werden.

Das erfindungsgemäße Verfahren wird im folgenden anhand eines Ausführungsbeispiels, das schematisch in 3 Figuren dargestellt ist, näher erläutert. Es zeigt

Fig. 1 eine Variante gemäß der Erfindung mit CO-Zuspeisung,

Fig. 2 eine Variante mit CO-Zuspeisung und Rückführung des Flashgases,

Fig. 3 eine Variante mit teilweiser Entspannung des beladenen Waschmittels.

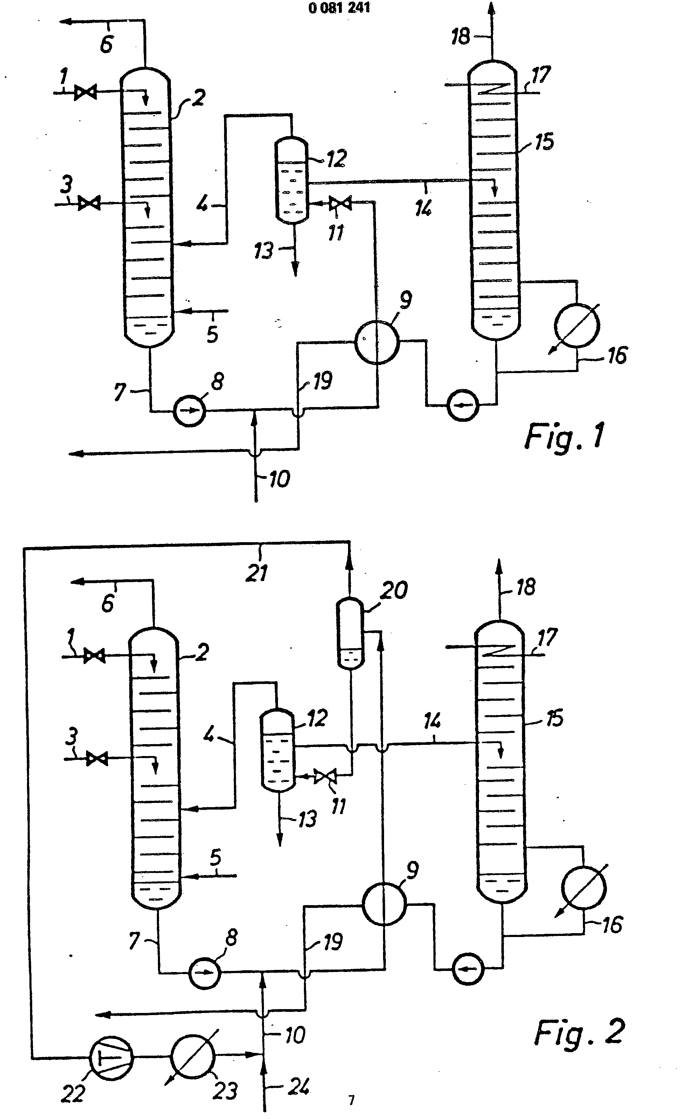

Gemäß Fig. 1 gelangt Waschmittel, beispiels-weise Methanol, das mit $CO_2$ beladen ist, über eine Leitung 1 aus einer nichtdargestellten Waschsäule mit einer Temperatur von ca. $-40^\circ C$ und einem Druck von 70 bar in den oberen Teil einer Anreicherungssäule 2, während über Lei-tung 3 mit $H_2S$ beladenes Methanol mit gleicher Temperatur und gleichem Druck aus dem $H_2S$-Abschnitt der Waschsäule auf die Mitte der Anreicherungssäule 2 aufgegeben wird. Infolge ei-nes sehr hohen $CO_2$-Gehaltes im Rohgas ist die-se Anreicherungssäule notwendig. Das Wasch-methanol enthält außerdem noch $H_2$, CO, gerin-ge Mengen Methan sowie Metallcarbonyle, wie $Ni(CO)_4$ und $Fe(CO)_5$. Über Leitung 4 wird der Anreicherungssäule weiterhin Entgasungsgas aufgegeben, auf das später noch näher eingegangen wird. Mit Hilfe eines über Leitung 5 dem Boden der Säule 2 zugeführten Inertgases, z. B. Stickstoff, wird das Methanol von $H_2$, CO und $CO_2$ sowie dem Methan befreit, die über Kopf als Restgas abgezogen (Leitung 6) und zur Unter-feuerung weitergeleitet werden. Durch Rückwa-schung des $H_2S$ am Kopf der Säule mit $H_2S$-freiem Methanol ist das Restgas nahezu $H_2S$-frei.

Das Methanol, das noch $CO_2$ und $H_2S$ sowie die Metallcarbonyle enthält, wird vom Sumpf der Säule 2 abgezogen und über Leitung 7 mit Pumpe 8 zur Anwärmung durch Wärmetauscher 9, von denen der Übersicht halber nur einer dargestellt ist, geleitet. In diesem Wärmetauscher besteht durch Zerfall der Carbonyle infolge Erwärmung in reaktionsfähige Schwermetalle und CO die Gefahr der Metallsulfidbildung (reaktionsfä-hige Schwermetalle + vorhandenes $H_2S$). Diese Metallsulfide wiederum führen zu Ablagerungen in den Wärmetauschern, so daß diese nach kürzester Zeit erneuert werden müßten.

Aus diesem Grunde wird erfindungsgemäß in das beladene Waschmethanol CO-reiches Gas, beispielsweise reines CO, über Leitung 10 in der Menge eingeblasen, daß der CO-Partialdruck über den CO-Gleichgewichtspartialdruck im Waschmittel erhöht wird. Dieser ist dabei abhängig von der Art der Metallcarbonyle, deren Konzentration dem Druck der Komponenten und der Temperatur. Durch diese Druckerhöhung erfolgt kein Carbonylzerfall und damit auch keine Metallsulfidbildung im Wärmetauscher 9.

Das mit CO angereicherte Waschmethanol wird nach dem Wärmetauscher 9 auf einen Druck entspannt 11, der unter dem Gleichgewichtspartialdruck des Waschmittels liegt und von unten durch einen Abscheider 12 geleitet. Durch die Entspannung zerfallen nunmehr die Metallcarbonyle in reaktionsfähige Schwermetalle und CO, und die Schwermetalle können mit dem im Methanol vorhandenen Schwefelwasserstoff Metallsulfide und Wasserstoff bilden. Diese Metallsulfide setzen sich ab und bilden einen »Schlamm«, der über Leitung 13 ausgeschleust wird. Der Schlamm wird dabei bei-spielsweise auf einem Filterboden zurückgehal-ten, so daß das nunmehr metallsulfidfreie Waschmethanol über Leitung 14 abgezogen und einer Regeneriersäule 15 aufgegeben werden kann. Der Abscheider 12 kann alternativ auch mit Füllkörpern gefüllt sein, auf denen sich die Metallsulfide ablagern. In diesem Fall sind die Füllkörper von Zeit zu Zeit auszuwechseln.

In der Regeneriersäule 15 wird der Schwefelwasserstoff durch Erwärmen mittels einer Sumpfheizung 16 und Kopfkühler 17 aus dem Methanol ausgetrieben (Leitung 18). Der Schwefelwasserstoff fällt dabei in ausreichender Menge und Reinheit an, um ihn zur weiteren Aufarbeitung einer Claus-Anlage zuzuführen. Das regenerierte Methanol verläßt die Regeneriersäule 15 am Sumpf über Leitung 19 und wird zur Waschsäule zurückgeführt.

Die im Abscheider 12 freigesetzten Entgasungsgase, die aus CO und $CO_2$ bestehen, wer-den über Leitung 4 vom Kopf abgezogen und der Anreicherungssäule 2 aufgegeben.

Die Variante gemäß Fig. 2 entspricht im wesentlichen der Verfahrensführung der Fig. 1, nur wird hier das mit CO angereicherte Waschmethanol nach Durchgang durch die Wärmetauscher 9 und vor Entspannung unter den Gleichgewichtspartialdruck einer Entspannung noch über den Gleichgewichtspartialdruck in einem Entspannungsgefäß 20 unterworfen. Der Druck wird dabei nur soweit entspannt, daß er immer noch über dem Gleichgewichtspartialdruck des CO im Waschmittel liegt, d. h., daß keine Carbonyle zerfallen. Bei dieser Entspannung wird ein Gas mit ca. 40 Gew.-% CO freigesetzt, das über Leitung 21 abgezogen, rückverdichtet 22, abgekühlt 23 und als Anreicherungsgas über Leitung 10 dem beladenen Waschmittel eingeblasen wird. Durch diese Kreislaufführung von COreichem Gas müssen über Leitung 24 lediglich die CO-Verluste durch Zugabe von z. B. reinem CO gedeckt werden.

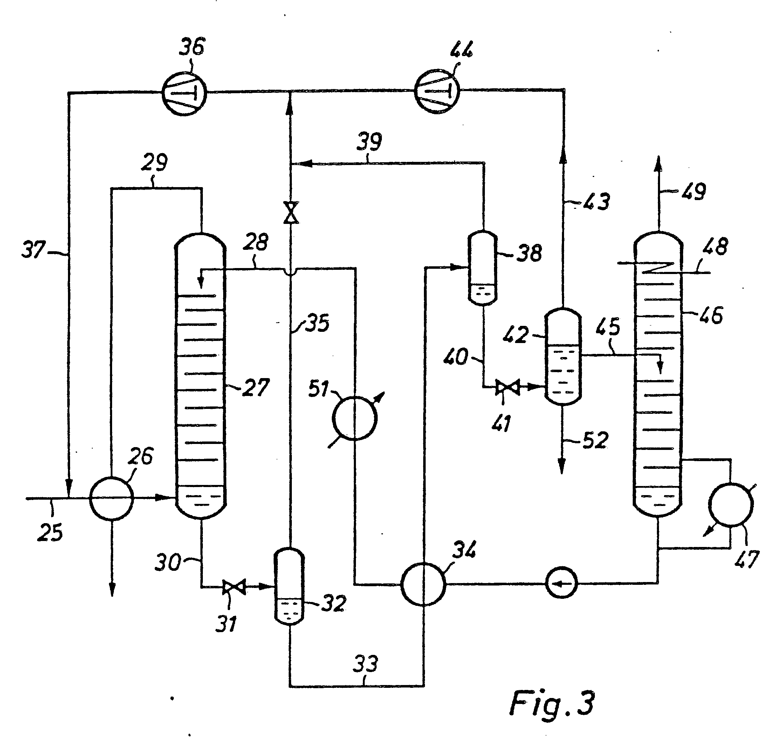

In Fig. 3 wird eine andere Möglichkeit zur Erlangung eines CO-Partialdruckes über dem CO-Gleichgewichtspartialdruck im Waschmittel beschrieben, bei welcher das unter Druck stehende Waschmittel nur teilweise entspannt wird.

Über Leitung 25 gelangt bereits abgekühltes, CO-haltiges Rohgas aus der Vergasung von Brennstoffen nach letzter Abkühlung in einem Wärmetauscher 26 in eine Waschsäule 27. Dort wird das Rohgas im Gegenstrom zu auf den Kopf der Waschsäule über Leitung 28 aufgegebenes, regeneriertes Methanol von den sauren Gasen sowie den vorliegenden Schwermetallcarbonylen, die gut löslich im Methanol sind, befreit und über Leitung 29 vom Kopf der Säule 27 nach Durchgang durch den Wärmetauscher 26 als Produkt abgezogen.

Das beladene Waschmethanol, das mit einem hohen Druck (beispielsweise 40 bar) anfällt, gelangt vom Sumpf der Waschsäule 27 über Leitung 30 und ein Entspannungsventil 31 in einen Abscheider 32. In dem Entspannungsventil wird dabei das Waschmethanol nur auf einen solchen Druck entspannt, daß der CO-Partialdruck über dem Gleichgewichtspartialdruck des CO im Waschmittel liegt. Dadurch wird verhindert, daß beim Durchgang des Waschmittels in Leitung 33 durch die Wärmetauscher 34 infolge der Erwärmung die vorhandenen Carbonyle zerfallen und mit dem im Waschmittel vorhandenen Schwefelwasserstoff schwer lösliche Metallsulfide bilden, die sich als Ablagerungen im Wärmetauscher niederschlagen und diesen verstopfen.

Die bei dieser Entspannung freigesetzten Entgasungsgase, die hauptsächlich aus CO und $CO_2$ bestehen, werden über Kopf vom Abscheider 32 über Leitung 35 abgezogen, rückverdichtet 36 und mit dem Rohgas über Leitung 37 beigemischt.

Das nunmehr erwärmte Waschmethanol wird in einem weiteren Entspannungsgefäß 38 auf einen Druck entspannt, der noch über dem Gleichgewichtspartialdruck des CO im Waschmittel liegt. Dabei entstehendes Flashgas (hautsächlich CO und $CO_2$) wird über Leitung 39 abgezogen und dem Entgasungs- bzw. Flashgas in Leitung 35 zugemischt.

Das teilentspannte Waschmethanol wird in einem Entspannungsventil 41 in Leitung 40 auf einen Druck unter dem CO-Gleichgewichtspartialdruck im Waschmittel entspannt und dem Abscheider 42 von unten zugeführt. Dort können sich wiederum Metallsulfide bilden, die sich zu einem »Schlamm« absetzen oder, falls der Abscheider mit einem Füllkörper gefüllt ist, auf diesem niederschlagen. Zur Reinigung des Abscheiders wird dabei entweder der Füllkörper von Zeit zu Zeit ausgewechselt oder der »Schlamm« über eine Leitung 52 ausgeschleust. Dabei ist noch eine nichtdargestellte Vorrichtung zum Zurückhalten des Schlamms im Abscheider 42 vorgesehen. Das freiwerdende Entgasungsgas (CO und $CO_2$) wird über Leitung 43 abgezogen, rückverdichtet 44 und den anderen Entgasungsgasen zugemischt.

Das Waschmethanol, das nunmehr nur noch $H_2S$ als Verunreinigung enthält, wird über Leitung 45 auf die Mitte einer Regeneriersäule 46 aufgegeben, in der es durch Erwärmung mittels Sumpfheizung 47 und Kopfkühler 48 von $H_2S$ befreit wird. Die dabei über Leitung 49 anfallende $H_2S$-Fraktion ist geeignet, um einer Claus-Anlage zugeführt werden zu können.

Das regenerierte Methanol wird vom Sumpf der Säule 46 abgezogen, im Wärmetauscher 34 gegen anzuwärmendes, beladenes Methanol abgekühlt, in einem Kühler 51 mittels Fremdkälte weiter auf Waschtemperatur (ca. $-30°$ C) abgekühlt und auf die Waschsäule 27 aufgegeben.

Beispiel 1 (CO-Zuspeisung)

Wegen eines sehr hohen $CO_2$-Gehaltes im Rohgas ist eine Anreicherungssäule vorgesehen, in der ein großer Teil des gelösten $CO_2$ bei tiefen Temperaturen mit einem Inertgas aus dem Methanol abgetrieben wird. Das vom Sumpf der Säule abgezogene Methanol enthält das gesamte mit dem Rohgas zugeführte $H_2S$ sowie noch soviel $CO_2$, daß nach Abtrieb der gelösten Gase eine $H_2S$-Fraktion mit mindestens 26% $H_2S$ erhalten wird. Bei der Abstrippung von $CO_2$ wird dabei auch das gesamte CO mit abgetrieben. Carbonyle, die mit dem Rohgas zugeführt werden, sind im Methanol gelöst und können in der Anreicherungssäule nicht abgetrieben werden, da ihre Löslichkeit größer ist als die von $CO_2$.

Durch Zugabe von 5 $Nm^3$ CO/t beladenes Methanol vor dem Wärmetauscher wird in diesem ein so hoher CO-Partialdruck erzeugt, daß auch nach Anwärmung des Methanols auf 80° C die gelösten Carbonyle nicht zerfallen. Die Menge des zugegebenen CO hängt dabei von der Beladung des Methanols mit $H_2S$ und $CO_2$ sowie von der Art der gelösten Carbonyle ab, da die Zerfallsneigung der verschiedenen Carbonyle unterschiedlich ist.

Beispiel 2

(teilweise Entspannung des Waschmittels)

Es wird ein CO-reiches Rohgas unter einem Druck von 60 bar in der Waschsäule mit kaltem Methanol gewaschen und so von $H_2S$, COS und einem Teil des $CO_2$ gereinigt. Nach einer Zwischenentspannung auf 21 bar, bei der die Hauptmenge des gelösten $H_2$ freigesetzt wird, ist je Tonne Methanol gelöst:

| | |
|---|---|
| $H_2$ | 0,5 $Nm^3$/t |
| CO | 3,7 $Nm^3$/t |
| $CO_2 + H_2S$ | 54,5 $Nm^3$/t |

Bei Anwärmung des Methanols im Wärmetauscher auf 80° C unter einem Druck von 21 bar tritt eine teilweise Entgasung der gelösten Gase auf. Die sich dabei einstellende Gasphase besteht aus:

| | |
|---|---|
| $H_2$ | 3,4 mol-% |
| CO | 18,3 mol-% |
| $CO_2 + H_2S$ | 59,1 mol-% |
| $CH_3OH$ | 19,2 mol-% |

Der CO-Partialdruck von 3,8 bar ist ausreichend, um den Zerfall der Carbonyle innerhalb der Wärmetauscher zu verhindern.

Der Druck bei der ersten Zwischenentspannung ist abhängig von der Art der Carbonyle, deren Konzentration, dem Druck der Komponenten und der Temperatur und muß entsprechend der Rohgasanalyse angepaßt werden.

## Patentansprüche

1. Verfahren zur Entfernung von sauren Gasen aus CO-haltigen Gasgemischen, die außerdem Verbindungen von zur Carbonylbildung befähigten Schwermetallen enthalten, durch Druckwäsche bei Temperaturen unter 0° C mit einem Waschmittel, das nach Aufnahme der sauren Bestandteile durch Entspannen, Austreiben und Anwärmen mittels Wärmetauschern von den sauren Gasen befreit wird, dadurch gekennzeichnet, daß zur Verhinderung der Abscheidung von Metallsulfiden auf den Wärmetauscherflächen während der Anwärmung des beladenen Waschmittels der CO-Partialdruck über den Gleichgewichtspartialdruck des CO im Waschmittel erhöht wird.

2. Verfahren nach Anspruch 1, dadurch gekennzeichnet, daß in das beladene Waschmittel vor den Wärmetauschern CO-reiches Gas eingeblasen wird.

3. Verfahren nach Anspruch 2, dadurch gekennzeichnet, daß in das beladene Waschmittel reines CO eingeblasen wird.

4. Verfahren nach Anspruch 2 oder 3, dadurch gekennzeichnet, daß das beladene Waschmittel nach Durchgang durch den Wärmetauscher auf einen Druck unter dem Gleichgewichtspartialdruck entspannt, die sich dabei bildenden Schwermetallsulfide abgeschieden, das Waschmittel in die Regeneriersäule eingeführt und das Entgasungsgas abgezogen wird.

5. Verfahren nach Anspruch 4, dadurch gekennzeichnet, daß das Entgasungsgas einer Anreicherungssäule zugeführt wird.

6. Verfahren nach Anspruch 4, dadurch gekennzeichnet, daß das Entgasungsgas nach Rückverdichtung dem Rohgas beigemischt wird.

7. Verfahren nach Anspruch 4, dadurch gekennzeichnet, daß das Waschmittel vor dem Entspannen auf einen Druck unter dem Gleichgewichtspartialdruck einem weiteren Entspannungsgefäß zugeleitet wird, auf einen Druck noch über dem Gleichgewichtspartialdruck entspannt und das dabei freiwerdende Flashgas dem beladenen Waschmittel vor den Wärmetauschern eingeblasen wird.

8. Verfahren nach Anspruch 1, dadurch gekennzeichnet, daß das beladene Waschmittel aus der Waschsäule nur soweit entspannt wird, daß der CO-Partialdruck vor der Erwärmung im Wärmetauscher über dem Gleichgewichtspartialdruck des CO im Waschmittel bleibt.

9. Verfahren nach Anspruch 8, dadurch gekennzeichnet, daß das durch die Entspannung freigesetzte Gas zum Rohgas zurückgeführt wird.

10. Verfahren nach Anspruch 9, dadurch gekennzeichnet, daß das nach der Entspannung verbleibende Waschmittel nach der Erwärmung im Wärmetauscher auf einen Druck über dem CO-Gleichgewichtspartialdruck entspannt und das entstehende Flashgas dem Rohgas zugeleitet wird.

11. Verfahren nach Anspruch 10, dadurch gekennzeichnet, daß das nach der Entspannung verbleibende Waschmittel auf einen Druck unter dem CO-Gleichgewichtspartialdruck entspannt, die sich dabei bildenden Schwermetallsulfide abgeschieden, das Waschmittel einer Regeneriersäule zugeführt und ein Entgasungsgas abgezogen wird.

12. Verfahren nach Anspruch 11, dadurch gekennzeichnet, daß das Entgasungsgas dem Rohgas zugeleitet wird.

## Claims

1. A method of removing acid gases from CO-containing gas mixtures, which in addition contain compounds of heavy metals which are capable of carbonyl formation, by washing under pressure at temperatures below 0° C with a washing agent, from which the acid gases are removed after the absorption of the acid components by expanding, driving out and heating by means of heat exchangers, characterised in that, in order to prevent the separation of metal sulphides on the heat exchanger surfaces, during the heating of the charged washing agent the CO-partial pressure is increased above the equilibrium partial pressure of CO in the washing agent.

2. A method as claimed in Claim 1, characterised in that upstream of the heat exchangers, gas rich in CO is blown into the charged washing agent.

3. A method as claimed in Claim 2, characterised in that pure CO is blown into the charged washing agent.

4. A method as claimed in Claim 2 or Claim 3, characterised in that after passage through the heat exchanger the loaded washing agent is expanded to a pressure below the equilibrium partial pressure, the heavy metal sulphides, which are thereby formed, are separated, the washing agent is introduced into the regenerating column, and the gas produced by degassing is withdrawn.

5. A method as claimed in Claim 4, characterised in that the gas produced by degassing is fed to an enrichment column.

6. A method as claimed in Claim 4, characterised in that the gas produced by degassing is added to the crude gas after re-compression.

7. A method as claimed in Claim 4, characterised in that prior to the expansion to a pressure below the equilibrium partial pressure, the washing agent is fed to a further expansion vessel, expanded to a pressure which is still above the equilibrium partial pressure and the flash gas which thereby escapes is blown into the charged washing agent upstream of the heat exchangers.

8. A method as claimed in Claim 1, characterised in that the charged washing agent from the washing column is only expanded to such an extent that, prior to the heating in the heat exchanger, the CO-partial pressure remains above the equilibrium partial pressure of CO in the washing agent.

9. A method as claimed in Claim 8, characterised in that the gas which is released as a result of the expansion is returned to the crude gas.

10. A method as claimed in Claim 9, characterised in that, after the heating in the heat exchanger, the washing agent which remains after the expansion is expanded to a pressure above the equilibrium partial pressure and the flash gas produced is fed to the crude gas.

11. A method as claimed in Claim 10, characterised in that the washing agent which remains after the expansion is expanded to a pressure below the CO equilibrium partial pressure, the heavy metal sulphides which are thereby formed are separated, the washing agent is fed to a regenerating column and a gas produced by degassing is withdrawn.

12. A method as claimed in Claim 11, characterised in that the gas produced by degassing is fed to the crude gas.

## Revendications

1. Procédé pour extraire des gaz acides de mélange gazeux contenant de l'oxyde de carbone et qui contiennent en outre des composés de métaux lourds susceptibles de former des carbonyles, par lavage sous pression à des températures inférieures à 0°C avec un agent de lavage qui, après absorption des constituants acides, est libéré des gaz acides par détente, extraction et chauffage au moyen d'échangeurs de chaleur, caractérisé en ce que, pour empêcher le dépôt de sulfures métalliques de se produire sur les surfaces de l'échangeur de chaleur pendant le chauffage de l'agent de lavage chargé, la pression partielle de CO est augmentée au-dessus de la pression partielle d'équilibre du CO dans l'agent de lavage.

2. Procédé selon la revendication 1, caractérisé en ce qu'un gaz riche en CO est injecté dans l'agent de lavage chargé en amont des échangeurs de chaleur.

3. Procédé selon la revendication 2, caractérisé en ce que du CO pur est injecté dans l'agent de lavage chargé.

4. Procédé selon la revendication 2 ou 3, caractérisé en ce que l'agent de lavage chargé, après passage dans les échangeurs de chaleur, est détendu à une pression inférieure à la pression partielle d'équilibre, les sulfures de métaux lourds se formant ainsi étant séparés, l'agent de lavage introduit dans la colonne de régénération et le gaz produit par dégazage évacué.

5. Procédé selon la revendication 4, caractérisé en ce que le gaz produit par dégazage est introduit dans une colonne d'enrichissement.

6. Procédé selon la revendication 4, caractérisé en ce que le gaz produit par dégazage est mélangé au gaz brut après recompression.

7. Procédé selon la revendication 4, caractérisé en ce que l'agent de lavage, avant la détente à une pression inférieure à la pression partielle d'équilibre, est introduit dans un autre récipient de détente, et détendu à une pression encore supérieure à la pression partielle d'équilibre et le gaz ainsi libéré est injecté dans l'agent de lavage chargé en amont des échangeurs de chaleur.

8. Procédé selon la revendication 1, caractérisé en ce que l'agent de lavage chargé provenant de la colonne de lavage n'est détendu qu'à un degré tel que la pression partielle de CO, avant le chauffage dans l'échangeur de chaleur, reste supérieure à la pression partielle d'équilibre du CO dans l'agent de lavage.

9. Procédé selon la revendication 8, caractérisé en ce que le gaz libéré par la détente est recyclé dans le gaz brut.

10. Procédé selon la revendication 9, caractérisé en ce que l'agent de lavage subsistant après la détente est détendu après chauffage dans l'échangeur de chaleur à une pression supérieure à la pression partielle d'équilibre de CO et le gaz ainsi obtenu est introduit dans le gaz brut.

11. Procédé selon la revendication 10, caractérisé en ce que l'agent de lavage subsistant après la détente est détendu à une pression inférieure à la pression partielle d'équilibre de CO, les sulfures de métaux lourds se formant ainsi étant séparés, l'agent de lavage introduit dans une colonne de régénération et un gaz produit par dégazage évacué.

12. Procédé selon la revendication 11, caractérisé en ce que le gaz produit par dégazage est introduit dans le gaz brut.

Fig. 1

Fig. 2

Fig.3

0 081 241